# DEMANDE DE BREVET EUROPEEN

(11) **EP 2 875 976 A1**
(43) Date de publication de la demande: **27.05.2015**
(21) Numéro de dépôt: 14190116.5
(22) Date de dépôt: 23.10.2014
(51) Int. Cl.: B60H 1/00

(54) **Dispositif de conditionnement thermique d'un flux d'air notamment pour véhicule automobile**

(30) Priorité: 12.11.2013 FR 1361028
(71) Demandeur: VALEO SYSTEMES THERMIQUES, 78320 Le Mesnil Saint-Denis (FR)
(72) Inventeur: Bellenfant, Aurélie, 72210 Roeze-sur-Sarthe (FR); Robillon, Lionel, 72230 Mulsanne (FR); Tourneux, Fabienne, 72000 Le Mans (FR); Azzouz, Kamel, 75012 Paris (FR); Hoger, Patrick, 72430 Ferce-sur-Sarthe (FR)
(74) Mandataire: Metz, Gaëlle

(57) **Abrégé**

L'invention concerne un dispositif de conditionnement thermique d'un flux d'air notamment pour véhicule automobile, comprenant :
- au moins un échangeur thermique (3) destiné à conditionner le flux d'air, et
- au moins un moyen de stockage thermique (35)
• comprenant un matériau à changement de phase composite (37) comportant au moins un premier matériau à changement de phase et au moins un deuxième matériau dont la structure forme une matrice de support du premier matériau à changement de phase,
• agencé de manière à être traversé par le flux d'air en aval de l'échangeur thermique (3) selon le sens d'écoulement du flux d'air.

Selon l'invention, le moyen de stockage thermique (35) comporte en outre au moins un moyen de conduction thermique (43) agencé en contact thermique avec le matériau à changement de phase composite (37) et de manière à échanger des calories avec le flux d'air.

## Description

L'invention concerne un dispositif de conditionnement thermique d'un flux d'air notamment pour véhicule automobile. Un tel dispositif de conditionnement permet le contrôle de la température de flux d'air vers une ou plusieurs zones de l'habitacle d'un véhicule automobile.

En effet, un véhicule automobile est couramment équipé d'au moins un dispositif de conditionnement thermique qui est destinée à réguler les paramètres aérothermiques de l'air distribué dans l'habitacle, en particulier la température d'un flux d'air délivré par l'installation à l'intérieur de l'habitacle.

Les dispositifs de conditionnement thermique d'un flux d'air comprennent généralement une boucle de climatisation dans laquelle circule un fluide réfrigérant. La mise en circulation du fluide réfrigérant est assurée par un compresseur entraîné par le moteur du véhicule automobile.

Dans sa généralité, le dispositif de conditionnement thermique comprend un boîtier délimité par des cloisons à travers lesquelles sont ménagées des ouvertures, dont au moins une entrée d'air et au moins une bouche de distribution d'air correspondant à une sortie d'aération ou de ventilation s'ouvrant dans l'habitacle du véhicule, ou encore à une sortie de dégivrage/désembuage notamment du pare-brise du véhicule.

De façon connue, le boîtier loge généralement un groupe moto-ventilateur également appelé pulseur pour faire circuler le flux d'air depuis l'entrée d'air vers la bouche de distribution d'air.

Le dispositif de conditionnement thermique comporte aussi des moyens de traitement thermique, tels que des échangeurs thermiques. Un échangeur thermique a pour fonction d'assurer un échange thermique entre le fluide réfrigérant en circulation à l'intérieur d'une pluralité de canaux, et un fluide extérieur traversant l'échangeur thermique. Le dispositif de conditionnement thermique comprend généralement un échangeur thermique agencé en face avant aussi appelé échangeur thermique externe et un échangeur thermique agencé pour conditionner le flux d'air à destination de l'habitacle aussi nommé échangeur thermique interne.

L'échangeur thermique externe permet un transfert thermique entre le fluide réfrigérant et l'air ambiant, tel qu'un flux d'air extérieur au véhicule.

L'échangeur thermique interne permet un échange thermique entre le fluide réfrigérant et le flux d'air destiné à être délivré à l'intérieur de l'habitacle qui traverse l'échangeur thermique interne. Il s'agit généralement d'un évaporateur interne permettant de refroidir le flux d'air le traversant préalablement à sa distribution à l'intérieur de l'habitacle à travers une bouche de distribution d'air.

Dans un mode de climatisation permettant un refroidissement de l'air à destination de l'habitacle, l'échangeur thermique externe joue un rôle de condenseur et l'échangeur thermique interne joue un rôle d'évaporateur. Dans cette configuration, l'énergie calorifique prélevée par l'échangeur thermique interne au flux d'air à destination de l'habitacle est libérée par condensation du fluide réfrigérant au niveau de l'échangeur thermique externe.

Toutefois, lorsque le moteur du véhicule est arrêté, la circulation du fluide réfrigérant n'a plus lieu, et l'échange thermique entre le flux d'air et le fluide réfrigérant ne peut s'opérer. L'air soufflé dans l'habitacle du véhicule n'est alors plus rafraîchi.

Cette situation est d'autant plus problématique que des systèmes d'économie de carburant récents prévoient l'arrêt automatique du moteur lorsque la voiture s'immobilise, privant fréquemment l'habitacle d'air rafraîchi. Il s'agit notamment de véhicules automobiles équipés d'un alterno-démarreur pour la mise en oeuvre d'un dispositif d'arrêt et de redémarrage automatique du moteur, par exemple l'arrêt du moteur à un feu tricolore ou à un stop, entraîne l'arrêt du fonctionnement du compresseur de la boucle de climatisation et donc un arrêt du fonctionnement de cette dernière.

Afin de remédier à l'arrêt du rafraîchissement de l'air soufflé dans l'habitacle lorsque le moteur est stoppé, il est connu d'intégrer au dispositif de conditionnement thermique du flux d'air au moins un moyen de stockage thermique.

En particulier, il est connu de pourvoir l'échangeur thermique interne, tel qu'un évaporateur, de réservoirs de moyen de stockage thermique en contact avec les canaux de circulation de fluide réfrigérant de sorte que le moyens de stockage et le fluide réfrigérant échangent de la chaleur entre eux.

Le moyen de stockage thermique comporte par exemple un matériau à changement de phase.

Lorsque la boucle de climatisation fonctionne, le matériau à changement de phase cède de l'énergie calorifique au fluide réfrigérant en passant en phase solide. Lorsque la boucle de climatisation est à l'arrêt, le flux d'air à destination de l'habitacle circulant au contact du matériau à changement de phase est refroidi par ce dernier qui lui prélève de l'énergie calorifique en passant en phase liquide.

Ainsi, lorsque le moteur du véhicule est en marche, le fluide réfrigérant refroidit à la fois l'air traversant l'échangeur thermique et le moyen de stockage thermique. Le moyen de stockage thermique restitue le froid (plus précisément des frigories) à l'air traversant l'échangeur thermique, lorsque le moteur est coupé.

Selon une solution connue, l'échangeur thermique interne comprend une pluralité de tubes d'échange thermique formés d'au moins une première plaque et une deuxième plaque, et d'une plaque de séparation intercalée entre les première et deuxième plaques. Les première et deuxième plaques sont couramment appelées plaques réfrigérantes.

Les première et deuxième plaques présentent respectivement au moins un canal de circulation du fluide réfrigérant et au moins un réservoir du matériau à changement de phase. La plaque de séparation présente quant à elle une pluralité d'orifices permettant de mettre en communication le ou les canaux de circulation de la première plaque respectivement avec un canal de la deuxième plaque, ou de mettre en communication les réservoirs des deux plaques.

Les première et deuxième plaques peuvent être identiques et par exemple être agencées en opposition. En particulier, les canaux des plaques peuvent définir des ondulations ou oscillations et dans ce cas le ou les canaux d'une plaque présentent des oscillations en opposition de phase avec les oscillations du ou des canaux en vis-à-vis de l'autre plaque.

Cependant, l'assemblage des première et deuxième plaques ainsi que de la plaque de séparation augmente l'épaisseur d'un tube d'échange thermique par rapport à un échangeur thermique classique, tel qu'un évaporateur classique, ce qui augmente la perte de charge sur l'air. Les performances se trouvent dégradées par rapport à un évaporateur classique.

En outre, du fait du design avec les oscillations des canaux des deux plaques en opposition de phase, la répartition de pression n'est généralement pas homogène au sein du tube d'échange thermique.

De même, la localisation des boîtes de fluide réfrigérant et de matériau à changement de phase les unes par rapport aux autres empêche une réduction d'épaisseur matière au-delà d'une certaine valeur limitant ainsi les productivités matière.

En outre, le remplissage du matériau à changement de phase peut être réalisé à l'aide d'au moins un orifice alimentant un réservoir central et une pluralité de trous supplémentaires par exemple oblongs sont agencés sur la plaque de séparation en recouvrement avec des réservoirs latéraux des deux plaques réfrigérantes de sorte que le remplissage du réservoir central assure le remplissage des réservoirs latéraux des deux plaques.

Pour augmenter la performance de l'échangeur thermique, les sections hydrauliques des plaques dites réfrigérantes devraient être augmentées.

Toutefois, du fait du remplissage en un point des réservoirs avec le matériau à changement de phase, chaque plaque réfrigérante présente des zones de recouvrement des réservoirs au droit desquelles la plaque de séparation comprend les trous par exemple oblongs pour le remplissage des réservoirs latéraux. Une telle contrainte empêche par conséquent d'augmenter la section hydraulique réfrigérante nécessaire à l'augmentation de la performance thermique de l'échangeur.

Enfin, les tubes du faisceau d'échange thermique sont généralement plus larges que ceux des faisceaux des échangeurs classiques, empêchant une interchangeabilité avec les produits standards actuels.

L'invention a donc pour objectif d'obtenir un dispositif de conditionnement thermique d'un flux d'air, notamment pour véhicule automobile, permettant de palier au moins partiellement les inconvénients de l'art antérieur.

À cet effet, l'invention a pour objet un dispositif de conditionnement thermique d'un flux d'air notamment pour véhicule automobile, comprenant :
- au moins un échangeur thermique destiné à conditionner le flux d'air, et
- au moins un moyen de stockage thermique
   - comprenant un matériau à changement de phase composite comportant au moins un premier matériau à changement de phase et au moins un deuxième matériau dont la structure forme une matrice de support du premier matériau à changement de phase,
   - agencé, de manière à être traversé par le flux d'air, en aval de l'échangeur thermique selon le sens d'écoulement du flux d'air,
      caractérisé en ce que le moyen de stockage thermique comporte en outre au moins un moyen de conduction thermique agencé en contact thermique avec le matériau à changement de phase composite et de manière à échanger des calories avec le flux d'air.

Afin de maintenir le confort thermique lors des phases d'arrêt du moteur, l'effet frigorifique nécessaire au maintien du confort est apporté par le matériau à changement de phase composite comprenant un premier matériau à changement de phase.

Lorsque le moteur du véhicule est en marche, le fluide réfrigérant refroidit le flux d'air traversant l'échangeur thermique, qui refroidit à son tour le matériau à changement de phase disposé en aval de l'échangeur thermique. Le matériau à changement de phase restitue le froid (plus précisément les frigories) à l'air traversant le matériau à changement de phase composite lorsque le moteur est coupé.

Placé en aval de l'échangeur thermique, le matériau à changement de phase composite est ainsi en contact direct avec l'air destiné à l'habitacle et peut échanger efficacement de l'énergie calorifique avec lui. Ceci permet d'améliorer le confort de l'utilisateur en cas d'arrêt de la boucle de climatisation.

De plus, il n'est pas nécessaire de modifier l'échangeur thermique ; autrement dit l'invention permet d'utiliser un échangeur thermique standard ce qui limite les coûts de fabrication.

De plus l'utilisation d'un matériau à changement de phase composite dont la structure du ou des deuxièmes matériaux permet de former une matrice du support du premier matériau à changement de phase, quelle que soit la phase du premier matériau à changement de phase, dispense de prévoir un contenant du matériau à changement de phase ce qui permet un échange thermique directement avec le flux d'air à destination de l'habitacle.

Il n'est donc plus nécessaire de prévoir de plaque de séparation entre les deux plaques réfrigérantes ni de réservoirs du matériau à changement de phase tel que proposé dans l'art antérieur.

Enfin, le ou les moyens de conduction thermique agencés en contact avec le matériau à changement de phase composite permettent d'améliorer les échanges convectifs et conductifs avec le flux d'air à destination de l'habitacle, améliorant ainsi le refroidissement du matériau à changement de phase composite.

En effet, lorsque la boucle de climatisation fonctionne, le matériau de changement de phase composite est refroidi par convection par le flux d'air refroidi par passage dans l'échangeur thermique travaillant en évaporateur, mais en outre par conduction car le flux d'air refroidit également le moyen de conduction thermique par convection, le moyen de conduction thermique étant lui même agencé en contact thermique avec le matériau à changement de phase composite.

Selon un aspect de l'invention, le deuxième matériau est choisi de sorte que le matériau à changement de phase composite présente une structure de support solide lorsque le premier matériau à changement de phase est dans une phase solide ou liquide.

Ainsi, quelle que soit la phase liquide ou solide du premier matériau à changement de phase, la structure du matériau composite reste suffisamment rigide pour former une matrice formant support du premier matériau à changement de phase sans qu'il soit nécessaire de prévoir un contenant étanche additionnel du premier matériau à changement de phase.

En outre, la structure du matériau composite est étanche de manière à éviter une fuite du premier matériau à changement de phase en phase liquide.

Selon un mode de réalisation, le matériau à changement de phase composite est réalisé sous la forme d'un bloc ajouré permettant le passage du flux d'air.

Le bloc peut présenter une pluralité d'alvéoles régulièrement réparties ou non de façon à être traversé par le flux d'air à conditionner.

Le bloc peut présenter en outre des ouvertures plus grandes que les alvéoles pour forcer l'échange thermique.

Selon un mode de réalisation, le moyen de stockage thermique comprend un empilement d'au moins un matériau à changement de phase composite et d'au moins un moyen de conduction thermique.

Le moyen de stockage thermique comprend par exemple une pluralité de moyens de conduction thermique réalisés sous la forme d'intercalaires interposés entre une pluralité de matériaux à changement de phase composites.

Les intercalaires présentent avantageusement une forme créant une perturbation de l'écoulement du flux d'air de manière à augmenter l'échange thermique avec le flux d'air.

Selon un autre aspect de l'invention, le moyen de stockage thermique comprend un support de fixation du matériau à changement de phase composite sur l'échangeur thermique, le support étant réalisé dans un matériau conducteur thermique.

Dans ce cas, le support améliore encore les échanges thermiques en assurant une conduction thermique entre le moyen de conduction thermique agencé en contact avec le flux d'air et le matériau à changement de phase composite et l'échangeur thermique, et en particulier les tubes d'échange thermiques dans lesquels circulent le fluide réfrigérant.

À cet effet, le support est avantageusement métallique, par exemple en aluminium.

Ledit dispositif peut en outre comporter une ou plusieurs caractéristiques suivantes, prises séparément ou en combinaison :
- le moyen de stockage thermique comprend au moins un matériau à changement de phase composite réalisé sous forme de bille ou de bande ;
- le moyen de conduction thermique forme un support de fixation d'au moins un matériau à changement de phase composite réalisé sous forme de bille ou de bande sur l'échangeur thermique ;
- le moyen de stockage thermique comprend une pluralité de billes de matériau à changement de phase composite et un moyen de conduction thermique réalisé sous forme d'un fil conducteur thermique formant support de fixation de la pluralité de billes de matériau à changement de phase composite sur l'échangeur thermique ;
- le moyen de stockage thermique comprend une bande sensiblement ondulée de matériau à changement de phase composite et un moyen de conduction thermique réalisé sous forme d'un fil conducteur thermique formant support de fixation de la bande sensiblement ondulée de matériau à changement de phase composite sur l'échangeur thermique. Le pas des ondulations de la bande de matériau à changement de phase composite peut être adapté ;
- la température de fusion du matériau à changement de phase est comprise entre 9 et 13°C. Cette plage de températures favorise une bonne congélation du premier matériau à changement de phase ;
- le matériau à changement de phase composite est réalisé sous la forme d'une matrice de paraffine, de polymère et de fibres de carbone.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une représentation schématique d'un dispositif de conditionnement d'un flux gazeux, tel qu'un flux d'air, pour véhicule automobile,
- la figure 2 est une vue en perspective d'un échangeur thermique du dispositif de conditionnement d'air de la figure 1,
- la figure 3a est une représentation schématique d'un premier exemple de matériau à changement de phase composite d'un moyen de stockage thermique du dispositif de conditionnement d'air de la figure 1,
- la figure 3b est une représentation schématique d'un deuxième exemple de matériau à changement de phase composite d'un moyen de stockage thermique du dispositif de conditionnement d'air de la figure 1,
- la figure 4 montre une représentation schématique en coupe de la structure du matériau à changement de phase composite de la figure 3a ou 3b,
- la figure 5 est une représentation schématique de l'échangeur thermique de la figure 2 et d'un moyen de stockage thermique selon un premier mode de réalisation,
- la figure 6 représente de façon schématique les échanges thermiques conductifs et convectifs du moyen de stockage thermique avec un flux d'air à destination de l'habitacle à conditionner,
- la figure 7 est une vue de dessus du moyen de stockage thermique selon le premier mode de réalisation assemblé à l'échangeur thermique,
- la figure 8 est une vue agrandie d'un intercalaire de conduction thermique du moyen de stockage thermique selon le premier mode de réalisation,
- la figure 9 est une vue de côté du moyen de stockage thermique selon le premier mode de réalisation assemblé à l'échangeur thermique,
- la figure 10 est une vue schématique représentant un moyen de stockage thermique selon un deuxième mode de réalisation,
- la figure 11 est une vue agrandie d'un détail de la figure 10 et représentant de façon schématique les échanges thermiques convectifs et conductifs,
- la figure 12 est une vue de dessus du moyen de stockage thermique selon un troisième mode de réalisation assemblé à l'échangeur thermique,
- la figure 13 est une vue agrandie de la figure 12 représentant plus en détail un moyen de stockage thermique selon le troisième mode de réalisation, et
- la figure 14 est une vue de côté du moyen de stockage thermique selon le troisième mode de réalisation assemblé à l'échangeur thermique.

Sur ces figures, les éléments sensiblement identiques portent les mêmes références.

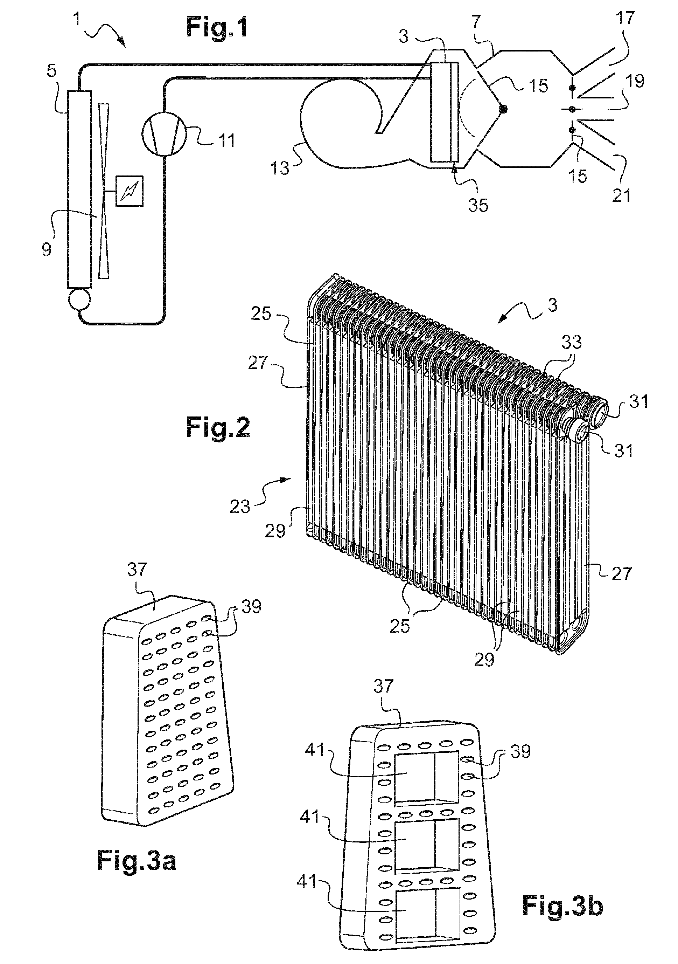

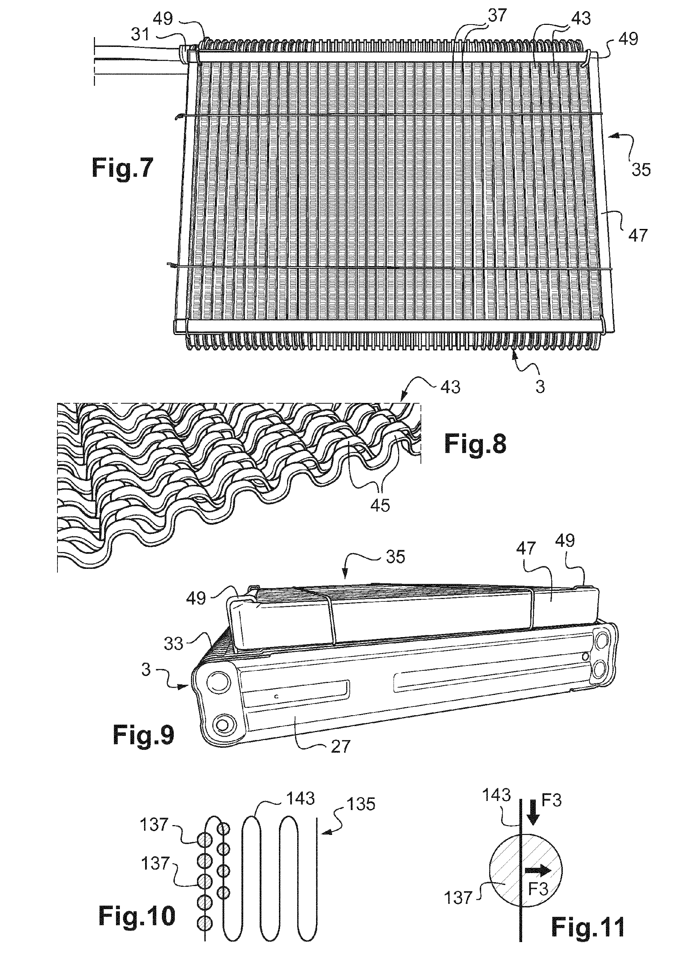

Les éléments du deuxième mode de réalisation des figures 10 et 11 correspondants aux éléments du premier mode de réalisation illustré sur les figures 1 à 9, portent les mêmes références précédées de la centaine 1.

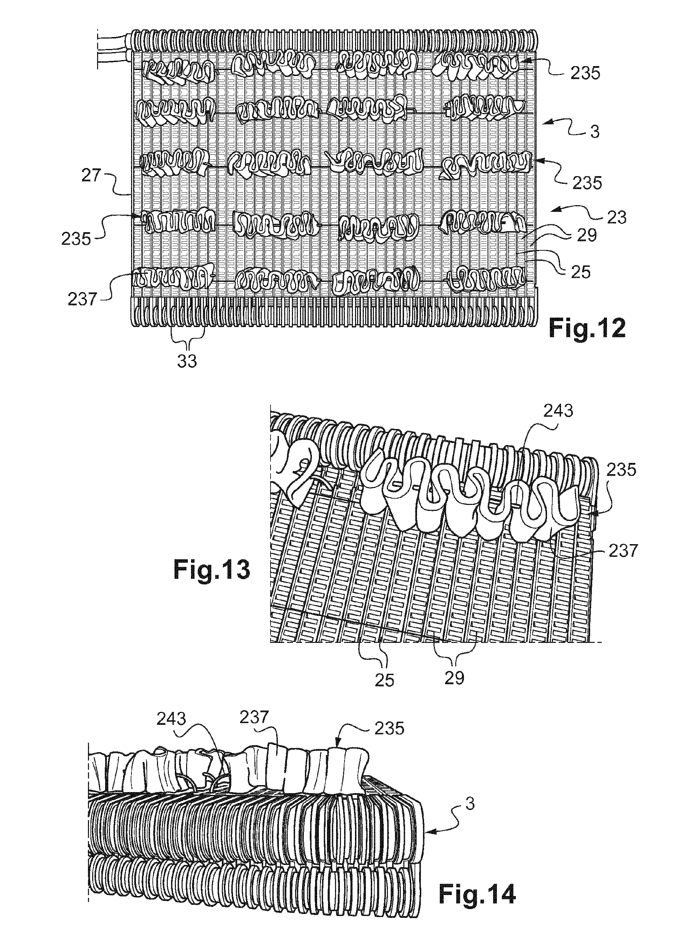

Les éléments du troisième mode de réalisation des figures 12 à 14 correspondants aux éléments du premier mode de réalisation illustré sur les figures 1 à 9, portent les mêmes références précédées de la centaine 2.

L'invention concerne un dispositif de conditionnement thermique 1 d'au moins un premier fluide, tel qu'un flux d'air, selon l'invention. Un tel dispositif de conditionnement thermique 1, par exemple d'un flux d'air, est apte à être utilisé notamment dans une boucle de climatisation pour véhicule automobile, dans laquelle circule un deuxième fluide, tel qu'un fluide réfrigérant.

Selon le mode de réalisation décrit, le dispositif de conditionnement thermique d'un flux d'air 1 comprend au moins un échangeur thermique 3, 5.

À titre d'exemple, le dispositif de conditionnement thermique d'un flux d'air 1 comprend un échangeur thermique 3, également appelé échangeur thermique interne 3, destiné à conditionner un flux d'air à destination de l'habitacle du véhicule automobile, par échange thermique avec le fluide réfrigérant. L'échangeur thermique interne 3 est par exemple placé à l'intérieur d'un boîtier de climatisation 7. Le boîtier de climatisation 7 est situé généralement dans l'habitacle du véhicule.

À titre d'exemple, le dispositif de conditionnement thermique d'un flux d'air 1 peut comprendre en outre un échangeur thermique dit externe 5 destiné à être placé au contact de l'air extérieur du véhicule, par exemple au niveau de la face avant du véhicule automobile. L'échangeur thermique externe 5 peut être notamment couplé avec un ventilateur 9 qui permet le passage de l'air extérieur au travers de l'échangeur thermique externe 5, par exemple en cas de faible vitesse ou d'arrêt du véhicule automobile.

Le fluide réfrigérant est mis en circulation par un compresseur 11 dont la fonction est d'augmenter la pression et la température du fluide réfrigérant. Le compresseur 11 est selon l'exemple illustré sur la figure 1 placé amont de l'échangeur thermique externe 5 et en aval de l'échangeur thermique interne 3 selon le sens de circulation du fluide réfrigérant.

Bien entendu, on peut prévoir au moins un organe de détente permettant d'abaisser la pression du fluide réfrigérant avant évaporation.

Le dispositif de conditionnement thermique 1 du flux d'air peut comprendre en outre un groupe moto-ventilateur 13 (schématisé sur la figure 1) permettant de propulser le flux d'air à destination de l'habitacle à travers le boîtier de climatisation 7. Le flux d'air à destination de l'habitacle peut notamment être régulé par un ou plusieurs organes de mixage, tel que des volets de mixage 15.

Le flux d'air à destination de l'habitacle est distribué à des zones de l'habitacle via des conduits de distributions d'air 17, 19 et 21, reliées par exemple à des sorties d'air sous pare-brise, des sorties en façade du tableau de bord, ou encore des sorties d'air sous le tableau de bord en direction des pieds.

La figure 2 est une vue schématique de l'échangeur thermique 3 destiné à conditionner le flux d'air à destination de l'habitacle selon l'invention. Cet échangeur thermique 3 peut être notamment utilisé en tant qu'évaporateur d'une boucle de climatisation d'un véhicule automobile.

En fonctionnement, l'échangeur thermique 3 permet un échange thermique entre le fluide réfrigérant, et le flux d'air traversant l'échangeur thermique 3.

Lorsque la boucle de climatisation fonctionne de façon à refroidir le flux d'air à destination de l'habitacle, le fluide réfrigérant s'évaporant au sein de l'échangeur thermique 3 travaillant en évaporateur capte de l'énergie calorique du flux d'air à destination de l'habitacle, afin de permettre le passage du fluide réfrigérant d'une phase liquide à une phase gazeuse. Dans ce mode de climatisation, l'échangeur thermique externe 5 (visible sur la figure 1) est par exemple apte à travailler en condenseur, le fluide réfrigérant cédant alors de l'énergie calorifique au flux d'air extérieur afin de permettre le passage du fluide réfrigérant de la phase gazeuse à une phase liquide.

Selon l'exemple illustré sur la figure 2, l'échangeur thermique 3 présente une forme générale sensiblement parallélépipédique.

L'échangeur thermique 3 comprend un faisceau d'échange thermique 23.

Le faisceau d'échange thermique 23 comprend un empilement successif de tubes d'échange thermique 25. Selon un exemple de réalisation, un tube d'échange thermique 25 peut comprendre une première plaque et une deuxième plaque assemblées. Un tube d'échange thermique 25 présente selon l'exemple de réalisation de la figure 2 une forme générale de parallélépipède rectangle. Les tubes d'échange thermique 25 comprennent respectivement au moins un canal de circulation du fluide réfrigérant. Un canal de circulation du fluide réfrigérant peut s'étendre sensiblement sur la totalité de la longueur d'un tube d'échange thermique 25 pour obtenir une surface d'échange importante.

En outre selon le mode de réalisation illustré, le faisceau d'échange thermique 23 présente à ses extrémités longitudinales deux plaques de fermeture 27, c'est-à-dire agencées de part et d'autre des tubes d'échange thermique 25.

L'échangeur thermique 3 peut comprendre en outre des ailettes de perturbation 29, disposées à chaque fois entre deux tubes d'échange thermique 25 adjacents, également entre un tube d'échange thermique 25 et une plaque de fermeture 27 adjacente.

Les ailettes de perturbation 29 ont pour fonction d'augmenter la surface d'échange thermique entre le fluide réfrigérant circulant dans les tubes d'échange thermique 25 et le flux gazeux, tel que le flux d'air extérieur qui traverse l'échangeur thermique 3.

De telles ailettes de perturbation 29 peuvent être formées à partir d'un feuillard métallique, par exemple en alliage d'aluminium.

Les tubes d'échange thermique 25 et les ailettes de perturbation 29 peuvent être brasées ensemble. Les ailettes de perturbation 29 peuvent présenter une forme générale sensiblement ondulée. Dans ce cas, les ailettes de perturbation 29 peuvent être fixées aux tubes d'échange thermique par leurs ondulations respectives, par exemple par brasage.

De plus, au moins l'une des plaques de fermeture 27 présente au moins un orifice qui débouche dans une tubulure 31 dite d'entrée ou de sortie pour l'alimentation ou le refoulement en fluide réfrigérant. Sur la figure 1, seule l'une des plaques de fermeture 27 comprend des tubulures 31 d'entrée et de sortie.

Les tubes d'échange thermique 25 sont reliés les uns aux autres en communication de fluide par l'intermédiaire de brides de jonction 33 ménagées sur les extrémités des plaques formant les tubes d'échange thermique 25. Les brides de jonction 33 peuvent être venues de matière, de préférence par emboutissage, de sorte qu'elles forment respectivement un anneau faisant saillie hors du plan de la plaque et délimitant une ouverture pour le passage du fluide réfrigérant.

Le dispositif de conditionnement thermique 1 du flux d'air comporte en outre, au moins un moyen de stockage thermique 35 (schématisé sur la figure 1). Le moyen de stockage thermique 35 est en particulier capable d'emmagasiner des frigories. Le moyen de stockage thermique 35 est on outre apte à restituer les frigories emmagasinées au flux d'air à destination de l'habitacle traversant le moyen de stockage thermique 35, notamment lors d'un arrêt de la boucle de climatisation, et donc d'un arrêt de l'échangeur thermique 3, ici un évaporateur 3, apte à refroidir le flux d'air à destination de l'habitacle.

À cet effet, le moyen de stockage thermique 35 est agencé de manière à être en contact direct avec le flux d'air à destination de l'habitacle. Ceci permet d'échanger efficacement de l'énergie avec le flux d'air pour améliorer le confort de l'utilisateur en cas d'arrêt de la boucle de climatisation.

Le moyen de stockage thermique 35 fait office d'un dispositif de refroidissement du flux d'air à destination de l'habitacle, annexe à l'échangeur thermique 3 destiné à conditionner le flux d'air à destination de l'habitacle travaillant en évaporateur.

Le moyen de stockage thermique 35 est agencé en aval de l'échangeur thermique 3 destiné à conditionner le flux d'air à destination de l'habitacle, selon le sens d'écoulement du flux d'air à destination de l'habitacle. En particulier, le moyen de stockage thermique 35 peut être fixé à l'échangeur thermique 3 destiné à conditionner le flux d'air à destination de l'habitacle.

En conséquence, le moyen de stockage thermique 35 peut également être agencé dans le boîtier de climatisation 7.

Ainsi, lorsque le moteur du véhicule est en marche, le fluide réfrigérant refroidit le flux d'air à destination de l'habitacle traversant l'échangeur thermique, le flux d'air à destination de l'habitacle refroidissant à son tour le moyen de stockage thermique 35. Lorsque le moteur est coupé, c'est le moyen de stockage thermique 35 qui restitue le froid (plus précisément des frigories) au flux d'air à destination de l'habitacle le traversant.

Selon l'invention, le moyen de stockage thermique 35 comprend un matériau à changement de phase composite 37 assurant le stockage d'énergie et la restitution de celle-ci, lorsque la boucle de climatisation, et donc le compresseur 11 sont à l'arrêt.

Des exemples de structure du matériau à changement de phase composite 37 du moyen de stockage thermique 35 sont illustrés aux figures 3a et 3b.

Le matériau à changement de phase composite 37 comporte :
- au moins un premier matériau qui est un matériau à changement de phase, connu sous le sigle PCM pour l'anglais « Phase Change Material », et
- au moins un deuxième matériau, choisi(s) de manière à former une matrice de support du premier matériau à changement de phase.

Lorsque la boucle de climatisation fonctionne, le premier matériau à changement de phase cède de l'énergie calorifique au flux d'air à destination de l'habitacle en passant en phase solide. Lorsque la boucle de climatisation est à l'arrêt, le flux d'air à destination de l'habitacle circulant au contact du matériau à changement de phase est refroidi par ce dernier qui lui prélève de l'énergie calorifique en passant en phase liquide. On parle également de phases de congélation / décongélation du premier matériau à changement de phase.

Le premier matériau à changement de phase utilisé dans le matériau à changement de phase composite 37 est par exemple sélectionné pour avoir une température de changement de phase de l'ordre comprise entre 9 °C et 13 °C. Cette plage de température correspondant à la plage de température du flux d'air provenant de l'échangeur thermique 3 travaillant en évaporateur lorsque la boucle de climatisation fonctionne, permet une meilleure congélation du premier matériau à changement de phase et donc une augmentation du temps de confort thermique.

Un deuxième critère de sélection du premier matériau à changement de phase est la chaleur latente de changement de phase pour garantir une grande capacité de stockage d'énergie. Selon le mode de réalisation décrit, le premier matériau à changement de phase utilisé présente avantageusement une chaleur latente comprise entre 100 et 300 kJ/kg.

Le premier matériau à changement de phase utilisé dans le matériau à changement de phase composite 37 peut notamment être un matériau à changement de phase organique ou inorganique végétale ou d'autre origine. À titre d'exemple, le premier matériau à changement de phase peut comporter de la paraffine.

Le ou les deuxièmes matériaux sont choisis de façon à permettre au matériau à changement de phase composite 37 de conserver une structure de support solide quel que soit l'état solide ou liquide du premier matériau à changement de phase.

Le ou les deuxièmes matériaux sont par exemple également choisis pour assurer une étanchéité empêchant une fuite du premier matériau à changement de phase dans la phase liquide.

En deuxième matériau, on peut prévoir à titre d'exemple un polymère et/ou des fibres de carbone.

Ainsi, selon un exemple particulier, le matériau à changement de phase composite 37 peut être réalisé sous la forme d'une matrice de paraffine, de polymère et de fibres de carbone permettant au matériau à changement de phase composite 37 d'être suffisamment solide dans les phases solide ou liquide du premier matériau à changement de phase.

Le matériau à changement de phase composite 37 peut être formé par moulage ou injection.

Selon un premier exemple illustré sur la figure 3a, le matériau à changement de phase composite 37 présente une structure ajourée pour permettre le passage du flux d'air à destination de l'habitacle. À cet effet, la structure du moyen de stockage thermique 35 présente une pluralité d'alvéoles 39 réparties, par exemple sur toute la structure, pour favoriser l'échange thermique entre le flux d'air à destination de l'habitacle et le premier matériau à changement de phase.

Selon un deuxième exemple illustré sur la figure 3b, le matériau à changement de phase composite 37 présente en outre des ouvertures 41 plus grandes que les alvéoles 39 pour forcer l'échange thermique entre le flux d'air à destination de l'habitacle et le premier matériau à changement de phase.

La structure du matériau à changement de phase composite 37 peut être adaptée selon les besoins de performance thermique, en fonction des pertes de charge.

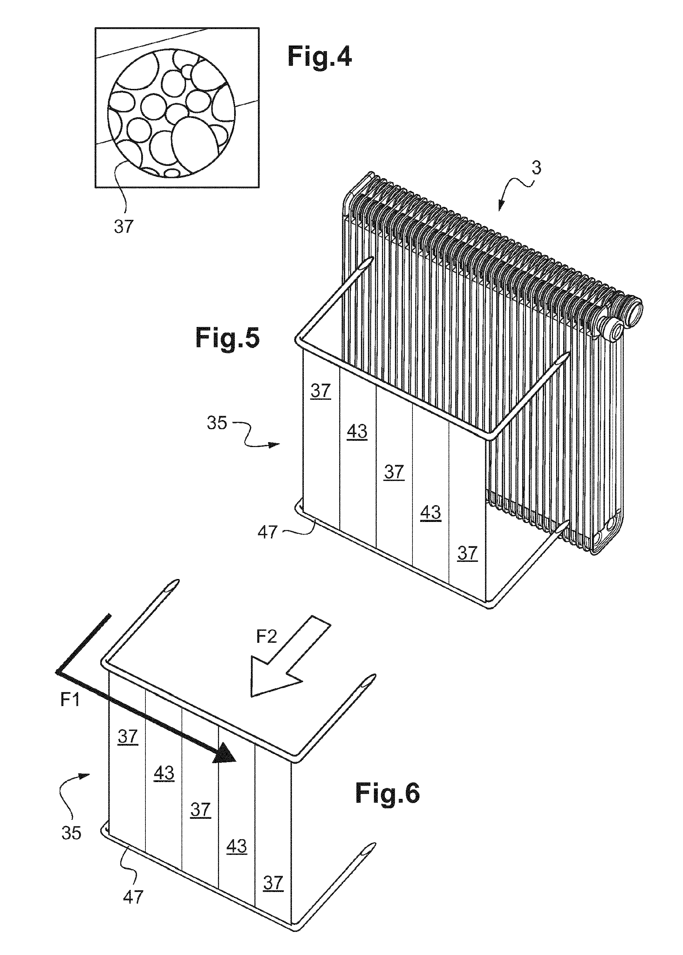

La figure 4 représente de façon schématique une vue macroscopique du matériau à changement de phase composite 37. Selon l'exemple illustré, le matériau à changement de phase composite 37 est réalisé par une agglomération de billes de matériau à changement de phase composite.

En outre, afin d'améliorer les échanges thermiques, le moyen de stockage thermique 35 comporte en outre au moins un moyen de conduction thermique 43 agencé en contact thermique avec le matériau à changement de phase composite 37 et de manière à échanger des calories avec le flux d'air à destination de l'habitacle, comme schématisé sur la figure 5.

On entend par « contact thermique », le fait qu'une conduction thermique est possible entre le moyen de conduction thermique 43 et le matériau à changement de phase composite 37. Le moyen de conduction thermique 43 peut notamment refroidir le matériau à changement de phase composite 37.

Plus précisément, le moyen de conduction thermique 43 est agencé en contact direct avec le matériau à changement de phase composite 37.

Lorsque la boucle de climatisation fonctionne, le moyen de conduction thermique 43 est refroidi par convection par le flux d'air refroidi par passage dans l'échangeur thermique interne 3 travaillant en évaporateur. Le matériau à changement de phase composite 37 est refroidi par:
- convection par le flux d'air à destination de l'habitacle en sortie de l'échangeur thermique interne 3 travaillant en évaporateur, grâce au contact direct entre le flux d'air à destination de l'habitacle et le matériau à changement de phase composite 37, et également
- par conduction par le moyen de conduction thermique 43 refroidi par le flux d'air à destination de l'habitacle par convection, du fait que le moyen de conduction thermique 43 soit agencé en contact direct, donc conductif, avec le matériau à changement de phase composite 37.

Le matériau à changement de phase composite 37 est donc refroidi à la fois par convection et conduction.

Lorsque la boucle de climatisation est à l'arrêt, le flux d'air à destination de l'habitacle traversant le moyen de stockage thermique 35 est refroidi par convection par le matériau à changement de phase composite 37 comme expliqué précédemment et en outre par le moyen de conduction thermique 43.

### Premier mode de réalisation

Selon un premier mode de réalisation illustré sur les figures 5 et 6, le moyen de stockage thermique 35 présente un empilement de matériaux à changement de phase composite 37 entre lesquels sont intercalés des moyens de conduction thermique 43.

Ainsi, lorsque la boucle de climatisation fonctionne, les matériaux à changement de phase composite 37 sont refroidis par conduction thermique par les moyens de conduction thermique 43 en contact avec les matériaux à changement de phase composite 37 tel que schématisé par la flèche F1 sur la figure 6, et par le flux d'air à destination de l'habitacle, schématisé par la flèche F2, traversant le moyen de stockage d'énergie 35 qui permet de refroidir les moyens de conduction thermique 43 et les matériaux à changement de phase composites 37.

Et, lorsque la boucle de climatisation est à l'arrêt, le flux d'air à destination de l'habitacle est refroidi par convection grâce à la transition de phase du premier matériau à changement de phase utilisé dans les matériaux à changement de phase composites 37, comme expliqué précédemment, et grâce aux moyens de conduction thermique 43 qui améliorent donc les échanges thermiques convectifs avec le flux d'air à destination de l'habitacle.

Les moyens de conduction thermique 43 sont avantageusement réalisés en un matériau à fort pouvoir de conduction thermique, par exemple comprenant de l'aluminium.

En particulier, il peut s'agir d'intercalaires 43 agencés entre les matériaux à changement de phase composite 37, tel qu'illustré sur la figure 7.

Les intercalaires 43 peuvent être formés à partir d'un feuillard métallique, par exemple en alliage d'aluminium.

Avantageusement, les intercalaires 43 présentent respectivement une forme créant des perturbations de l'écoulement du flux d'air à destination de l'habitacle passant à travers eux. Ces perturbations permettent d'augmenter l'échange thermique avec le flux d'air à destination de l'habitacle. Un meilleur échange avec le flux d'air à destination de l'habitacle permet une meilleure efficacité des phases de congélation / décongélation du premier matériau à changement de phase.

Les intercalaires 43 peuvent présenter une forme générale sensiblement ondulée. Les ondulations des intercalaires 43 sont agencées directement en contact avec un matériau à changement de phase composite. Les ondulations des intercalaires présentent par exemple une hauteur comprise entre 2mm et 5mm.

Selon l'exemple illustré sur la figure 8, les intercalaires 43 sensiblement ondulés présentent des perturbateurs 45. Plus précisément, les intercalaires 43 présentent des rangées de perturbateurs 45. Sur une rangée de perturbateurs 45, ces perturbateurs sont par exemple agencés en décalage les uns part rapport aux autres.

L'ensemble 37, 43 formé par le(s) matériau(x) à changement de phase composite(s) et un ou plusieurs moyens de conduction thermique 43 peut être monté dans un support 47 permettant également une conduction thermique et fixé à l'échangeur thermique interne 3.

À titre d'exemple, le moyen de stockage 35 thermique peut comporter un cadre métallique 47, par exemple en aluminium ou en alliage d'aluminium, formant support de l'empilement de matériaux à changement de phase composites 37 et de moyens de conduction thermique 43, ici sous la forme d'intercalaires 43.

Le cadre métallique 47 présente par exemple des accroches 49 mieux visibles sur les figures 7 et 9. Ces accroches 49 sont également en un matériau conducteur thermique, par exemple métalliques tel qu'en aluminium.

Ceci permet d'ajouter une conduction thermique entre la source froide formée par l'échangeur thermique interne 3 travaillant en évaporateur et le ou les matériaux à changement de phase composites 37 du moyen de stockage thermique 35.

Le cadre 47 forme un lien de conduction thermique entre l'échangeur thermique interne 3 travaillant en évaporateur et plus précisément les tubes d'échange thermique 25 dans lesquels circule le réfrigérant, et le moyen de stockage thermique 35, et plus précisément le(s) matériau(x) à changement de phase composite(s) 37. On obtient ainsi une conduction thermique des calories, ici des frigories des tubes d'échange thermique 25, vers le ou les matériaux à changement de phase composites 37 du moyen de stockage thermique 35, favorisant ainsi une congélation rapide et donc une meilleure efficacité de stockage du premier matériau à changement de phase utilisé dans le matériau à changement de phase composite 37.

Ainsi, lorsque la boucle de climatisation fonctionne, le ou les matériaux à changement de phase composites 37 sont en outre refroidis par conduction par l'intermédiaire du cadre 47 qui est en contact avec les tubes d'échanges thermiques 25 de l'échangeur interne 3 travaillant en mode évaporateur.

En variante, c'est le moyen de conduction thermique 143, 243 prévu en contact avec le ou les matériaux à changement de phase composites 137, 237 qui forme un support de ce ou ces matériaux à changement de phase composites 137, 237 et qui est fixé à l'échangeur thermique interne 3.

### Deuxième mode de réalisation

Selon un deuxième mode de réalisation schématisé sur les figures 10 et 11, le moyen de stockage thermique 135 comprend au moins une bille de matériau à changement de phase composite 137 et un moyen de conduction thermique 143 formant support de la ou les billes de matériau à changement de phase composite 137.

Le moyen de conduction thermique 143 est par exemple réalisé sous la forme d'un fil conducteur thermique. Selon les besoins, la forme du fil conducteur thermique 143 peut être adaptée. En particulier, selon l'exemple de la figure 10, le fil conducteur thermique 143 présente une forme sensiblement ondulée.

Une pluralité de billes de matériau à changement de phase composite 137 peut être assemblée au fil conducteur thermique 143, par exemple par moulage.

Le moyen de stockage thermique 135 présente alors par exemple une forme sensiblement de rideau de billes de matériau à changement de phase composite 137 avec un fil conducteur supportant l'ensemble des billes.

Une pluralité de moyens de stockage thermique 135 formant des rideaux de billes en matériau à changement de phase composite 137 peuvent être fixés à l'échangeur thermique interne 3.

Comme schématisé sur la figure 11 par les flèches F3, le fil conducteur thermique 143 fixé à la source froide, ici l'échangeur thermique interne 3 travaillant en évaporateur, permet une conduction thermique des frigories des tubes d'échange thermique 25, vers les billes en matériau à changement de phase composite 137, favorisant ainsi une congélation rapide et donc une meilleure efficacité de stockage du premier matériau à changement de phase utilisé dans le matériau à changement de phase composite 137.

De façon similaire au premier mode de réalisation, lorsque la boucle de climatisation est à l'arrêt, le flux d'air à destination de l'habitacle est refroidi par convection grâce à la transition de phase du premier matériau à changement de phase utilisé dans les billes de matériau à changement de phase composite 137, prélevant de l'énergie calorifique au flux d'air à destination de l'habitacle traversant le moyen de stockage thermique 135.

### Troisième mode de réalisation

Selon un troisième mode de réalisation illustré sur les figures 12 à 14, un moyen de stockage thermique 235 comprend une bande de matériau à changement de phase composite 237 et le moyen de conduction thermique 243 est réalisé sous la forme d'un fil conducteur thermique formant support de la bande de matériau à changement de phase composite 237 et fixé à l'échangeur thermique interne 3.

Selon l'exemple illustré sur la figure 12, une pluralité de tels moyens de stockage thermique 235 sont fixés à l'échangeur thermique interne 3. Selon un exemple non limitatif, les moyens de stockage thermique sont régulièrement répartis sur une face de l'échangeur thermique interne 3.

Selon un exemple d'assemblage, le fil conducteur thermique 243 peut transpercer la bande de matériau à changement de phase composite 237.

De plus, selon le troisième mode de réalisation illustré, une bande de matériau à changement de phase composite 237, mieux visible sur les figures 13 et 14, peut présenter une forme créant des perturbations de l'écoulement du flux d'air, par exemple une forme sensiblement ondulée.

Le pas de la bande sensiblement ondulée de matériau à changement de phase composite 237 peut être ajusté suivant la quantité de matériau à changement de phase composite 237 souhaitée et la perte de charge tolérée.

Selon une variante non représentée, un moyen de stockage thermique 235 peut comporter deux bandes de matériau à changement de phase composite 237 sensiblement ondulées, telles que les ondulations d'une première bande soient décalées par rapport aux ondulations de manière à générer des turbulences de l'écoulement du flux d'air et ainsi augmenter la capacité d'échange avec le flux d'air.

On comprend donc que l'utilisation d'un matériau à changement de phase composite 37, 137, 237 permet de garantir une conductivité thermique accrue par rapport à un matériau à changement de phase intégré au sein de l'échangeur thermique interne 3, ainsi qu'une bonne tenue mécanique.

En effet, contrairement aux solutions de l'art antérieur permettant de maintenir le confort grâce à l'intégration d'un matériau à changement de phase dans l'évaporateur, les solutions proposées selon le premier, deuxième ou troisième modes de réalisation, n'impliquent aucune modification des échangeurs thermiques existants. Cette solution peut donc facilement être agencée en ajout d'un évaporateur standard.

De plus, l'utilisation de matériau à changement de phase composite rend obsolète la nécessité de réservoir afin stocker du matériau à changement de phase liquide. Le matériau à changement de phase sous sa forme composite est en contact direct avec l'air, il n'y a donc pas de résistance à l'échange thermique au travers d'une surface secondaire formant le contenant du matériau à changement de phase.

En outre, la présence de moyens conducteurs thermiques 43, 47 ; 143 ; 243 entre le ou les matériaux à changement de phase composites 37, 137, 237 et la source froide, selon les exemples décrits l'échangeur thermique 3 travaillant en évaporateur dans lequel circule le fluide réfrigérant, permet d'améliorer les phases de congélation des matériaux à changement de phase et ainsi d'améliorer les échanges convectifs entre le flux d'air à destination de l'habitacle et le matériau à changement de phase composite 37, 137, 237.

Les différentes solutions proposées augmentent la durée de confort thermique dans l'habitacle lors de l'arrêt de la boucle de climatisation. En effet, les inventeurs ont constaté avec les modes de réalisation précédemment décrits une durée de maintien du confort thermique dans l'habitacle supérieur à 60 secondes après l'arrêt du compresseur.

Enfin, les solutions présentées ci-dessus sont simples à fabriquer industriellement.

## Revendications

1. Dispositif de conditionnement thermique (1) d'un flux d'air notamment pour véhicule automobile, comprenant :
- au moins un échangeur thermique (3) destiné à conditionner le flux d'air, et
- au moins un moyen de stockage thermique (35 ; 135 ; 235)
• comprenant un matériau à changement de phase composite (37 ; 137 ; 237) comportant au moins un premier matériau à changement de phase et au moins un deuxième matériau dont la structure forme une matrice de support du premier matériau à changement de phase,
• agencé, de manière à être traversé par le flux d'air, en aval de l'échangeur thermique (3) selon le sens d'écoulement du flux d'air,
**caractérisé en ce que** :
- le moyen de stockage thermique (35 ; 135 ; 235) comporte en outre au moins un moyen de conduction thermique (43 ; 143 ; 243) agencé en contact thermique avec le matériau à changement de phase composite (37 ; 137 ; 237) et de manière à échanger des calories avec le flux d'air.

2. Dispositif selon la revendication 1, dans lequel le deuxième matériau est choisi de sorte que le matériau à changement de phase composite (47 ; 137 ; 237) présente une structure de support solide lorsque le premier matériau à changement de phase est dans une phase solide ou liquide.

3. Dispositif selon l'une des revendications 1 ou 2, dans lequel le matériau à changement de phase composite (37) est réalisé sous la forme d'un bloc ajouré permettant le passage du flux d'air.

4. Dispositif selon l'une quelconque des revendications précédentes, dans lequel le moyen de stockage thermique (35) comprend un empilement d'au moins un matériau à changement de phase composite (37) et d'au moins un moyen de conduction thermique (43).

5. Dispositif selon la revendication 4, dans lequel le moyen de stockage thermique (35) comprend une pluralité de moyens de conduction thermique (43) réalisés sous la forme d'intercalaires (43) interposés entre une pluralité de matériaux à changement de phase composites (37).

6. Dispositif selon l'une quelconque des revendications précédentes, dans lequel le moyen de stockage thermique (35 ; 135 ; 235) comprend un support (47 ; 143 ; 243) de fixation du matériau à changement de phase composite (37 ; 137 ; 237) sur l'échangeur thermique (3), le support (47 ; 143 ; 243) étant réalisé dans un matériau conducteur thermique.

7. Dispositif selon l'une des revendications 1 ou 2, dans lequel le moyen de stockage thermique (135 ; 235) comprend au moins un matériau à changement de phase composite (137 ; 237) réalisé sous forme de bille ou de bande.

8. Dispositif selon la revendication 7, dans lequel le moyen de conduction thermique (143 ; 243) forme un support de fixation d'au moins un matériau à changement de phase composite (137 ; 237) réalisé sous forme de bille ou de bande sur l'échangeur thermique (3).

9. Dispositif selon la revendication 8, dans lequel le moyen de stockage thermique (135) comprend une pluralité de billes de matériau à changement de phase composite (137) et un moyen de conduction thermique (143) réalisé sous forme d'un fil conducteur thermique (143) formant support de fixation de la pluralité de billes de matériau à changement de phase composite (137) sur l'échangeur thermique (3).

10. Dispositif selon la revendication 8, dans lequel le moyen de stockage thermique (235) comprend une bande sensiblement ondulée de matériau à changement de phase composite (237) et un moyen de conduction thermique (243) réalisé sous forme d'un fil conducteur thermique (243) formant support de fixation de la bande sensiblement ondulée de matériau à changement de phase composite (237) sur l'échangeur thermique (3).

11. Dispositif selon l'une quelconque des revendications précédentes,dans lequel la température de fusion du matériau à changement de phase est comprise entre 9 et 13°C.

12. Dispositif selon l'une quelconque des revendications précédentes, dans lequel le matériau à changement de phase composite (37 ; 137 ; 237) est réalisé sous la forme d'une matrice de paraffine, de polymère et de fibres de carbone.
